# EUROPEAN PATENT SPECIFICATION

(11) **EP 1 167 502 B1**
(45) Date of publication and mention of the grant of the patent: **28.04.2004**
(21) Application number: 01115428.3
(22) Date of filing: 27.06.2001
(51) Int. Cl.: C11D 3/00, B01D 19/04, C11D 1/825, C11D 1/72, C11D 3/37, C11D 1/83

(54) **Silicone based foam control compositions stable in detergents**
In Waschmitteln stabile auf Silikonbasierende Schaumregulierungszusammensetzungen
Compositions antimousses à base de silicone stables dans des formulations détersives

(30) Priority: 30.06.2000 US 609656
(43) Date of publication of application: 02.01.2002
(73) Proprietor: DOW CORNING CORPORATION, Midland Michigan 48686-0994 (US)
(72) Inventor: Elms, Russell Allen, Midland, Michigan 48642 (US); Lin, Feifei, Midland, Michigan 48640 (US); Severance, Martin Kent, Midland, Michigan 48642 (US)
(74) Representative: Sternagel, Fleischer, Godemeyer & Partner Patentanwälte

(56) References cited:
- EP-A- 0 638 346
- EP-A- 0 663 225
- EP-A- 0 769 548
- EP-A- 0 774 503

## Description

This invention relates to silicone based foam control compositions that are stable in detergents. More particularly, the invention relates to silicone based foam control compositions comprising silicone based antifoaming agents and silicas dispersed in detergent compatible carriers. The invention further relates to methods of preparing said foam control compositions and of their delivery into detergents.

An antifoam or defoamer is a material which, when added in low concentration to a foaming liquid, controls undesirable levels of foaming. These agents have found a wide variety of applications ranging from pulp and paper and other processing industries to use in cleaners and other products. It is important that the antifoam be inert and not capable of reacting with the product or system in which it is used and that it not has an adverse effect on the product or system. Silicone based antifoams are favored because they have excellent chemical stability, they rarely affect the process they are used to treat and they exhibit a relatively high antifoam effect even in very small amounts.

The use of silicone containing compositions as antifoams or defoamers is known, but it is well established that this art is unpredictable and slight modification can greatly alter performance of such compositions. Most such compositions contain a silicone fluid (usually a polydimethylsiloxane), often in combination with small amounts of silica. Additionally, these compositions may include various surfactants and dispersing agents for improved foam control or stability.

It is recognized in the art that difficulties are common when attempting to deliver silicone based antifoams into highly concentrated surfactant media. Additionally, stability problems such as coalescence, flocculation and aggregation may occur after an initially successful delivery. Furthermore, problems with phase separation (creaming) of components are frequently encountered when these antifoam compositions are stored prior to their use. Recent attempts in the art to address these issues include the following.

McGee et al. in U.S. Patent Nos. 5,380,464 and 5,543,082 disclose foam control compositions containing: (1) the reaction product of a silicone based defoamer (for example, the reaction product of a polyorganosiloxane, a silicon resin compound, a finely divided silica and a suitable catalyst); (2) a silicone glycol copolymer, a nonionic silicone surfactant or one of several organic dispersants; and optionally (3) a finely divided filler, such as one of a group of specified silicas, and/or one of a group of end blocked polyorganosiloxanes.

Tonge et al. in EP 0 663 225 disclose foam control compositions comprising: (1) a silicone antifoaming agent (such as a mixture of a silicone and a silica); (2) a cross-linked organopolysiloxane polymer having at least one polyoxyalkylene group; and optionally (3) a solvent or diluent such as water, an alcohol alkoxylate or (perhaps) both.

Fey et al. in U.S. Patent 5,908,891 disclose a dispersible silicone composition comprising: (1) a silicone composition which may be similar to the reaction product disclosed by McGee et al. as cited above; (2) mineral oil; and optionally (3) a finely divided filler such as silica and/or certain polyorganosiloxanes.

Bausch et al. in EP 0 638 346 disclose a dispersible silicone composition comprising: (1) a silicon reaction product which may be similar to that of McGee et al. as described above; (2) a nonaqueous continuous phase such as an alcohol alkoxylate; (3) a hydrophobic stabilizer such as a silica; and optionally (4) at least one nonionic silicone surfactant such as a polydimethylsiloxane polyalkyleneoxide block copolymer and/or a non-reinforcing inorganic filler such as a ground crystalline silica.

Balzer in EP 0 769 548 discloses an aqueous defoaming dispersion containing: (1) a silicone oil (described as a linear organosiloxane polymer); (2) a hydrophobic silica; (3) a surfactant such as an alkyl polyglycoside of a specified class which may be mixed with anionic or nonionic surfactants: and (4) a water soluble nonsurfactant such as a guar gum.

The present invention offers alternative formulations in this field that possess generally superior properties to the compositions of the prior art.

It is an object of this invention to provide compositions that are stable in detergents (resistant to phenomenon such as coalescence, flocculation and aggregation), are effective at foam control in such media and would be expected to exhibit low rates of phase separation (creaming) during storage. Thus, this invention relates to a foam control composition comprising:
(I) a silicone based antifoaming agent.
(II) a silica,
(III) an alkylpolyglycoside formulation,
(IV) a linear alcohol ethoxylate.
(V) water, and
(VI) a silicone polyether.
The foam control composition may further comprise (VII): a nonyl phenyl ethoxylate formulation, ethyl alcohol or an anionic surfactant. A further object of this invention relates to methods for making said foam control composition and for its delivery into detergents.

The compositions of this invention comprise:
(I) a silicone based antifoaming agent,
(II) a silica,
(III) an alkylpolyglycoside formulation,
(IV) a linear alcohol ethoxylate,
(V) water,
(VI) a silicone polyether, and optionally,
(VII) a nonyl phenyl ethoxylate formulation, ethyl alcohol or an anionic surfactant.

Each of the components of the composition should be taken as distinct from all the others regardless of any incidental overlap. Further, while there are perhaps technical differences between antifoams and defoamers, these expressions should be taken to be synonymous for purposes herein. Unless otherwise stated, all references to "parts" in the context of concentration or amounts should be taken to mean "parts by weight" based on all components present.

Component (I) is a silicone based antifoaming agent. The silicones therein may be linear, branched, cross-linked or mixtures thereof, with single or mixtures of non-linear silicones preferred. Suitable antifoaming agents could be based on a cross-linked silicone containing fluid as described by Aizawa et al. in U.S. Patent No. 4,639,489 ("CLSF" as defined further below), a branched silicone containing fluid as described by John et al. in EP 0 217 501 ("BSF" as defined further below) or a linear silicone containing fluid ("LSF") as defined further below. It has been found that 10-80 parts of component (I) is a suitable range for use in the compositions of this invention, with 30-60 parts being preferred and 40-60 parts being most preferred.

In the compositions of this invention, component (II) is a silica, preferably precipitated or fumed. Appropriate examples include Sipernat ™ D17 and Sipernat ™ D13 (commercially available from Degussa-Huls). A suitable compositional range for this component is 1-20 parts, with 1-10 parts being preferred and 2-6 parts being most preferred.

Component (III) is an alkylpolyglycoside formulation, preferably a formulation comprising at least 40% by weight alkylpolyglycoside with the balance being water such as Glucopon ™ 625 FE commercially available from Henkel Corporation that contains glucopyranose C10-C16. It has been found that use of 1-90 parts of this component is suitable for the compositions of this invention. It is preferred to use 10-70 parts and most preferred to use 20-50 parts of this.

In the compositions of this invention, component (IV) is a linear alcohol ethoxylate or a mixture of linear alcohol ethoxylates. In one embodiment of the present invention component (IV) is a mixture of ethoxylated tridecyl alcohol, for examples available as Iconol TDA-10 from BASF Corporation, with a linear alcohol ethoxylate different from ethoxylated tridecyl alcohol. According to another embodiment of the present invention component (IV) is free of ethoxylated tridecyl alcohol. A preferred linear alcohol ethoxylate can be obtained as Neodol ™ 23-6.5 from Shell Chemical Company. Using 1-70 parts of this component has been found acceptable for this invention with 2-50 parts being preferred and 5-25 parts being most preferred.

Component (V) is water. It has been found that using 1-70 parts of this component is suitable, with 2-50 parts being preferred and 5-25 parts being most preferred.

In the compositions of this invention, component (VI) is a silicone polyether. This polyether may be linear or branched or comprise a mixture of both types. Appropriate specific examples of component (VI) include a branched silicone polyether as described by Tonge et al. in EP 0 663 225 ("BSPE" as defined further below), a linear silicone polyether containing fluid described by Bausch et al. in EP 0 638 346 (Surfactant 4) (hereinafter, "LSPE" as defined further below) and a linear silicone polyether which is a block copolymer of polydimethylsiloxane and polyalkylene oxide described by Bausch et al. in EP 0 638 346 (Surfactant 3) (hereinafter, "LSPE2" as defined further below). A suitable compositional range for this component is 0.5-50 parts. It is preferred that 1-20 parts be used, and it is most preferred that 2-10 parts be used. Parts here are for the polyether only and do not include any solvents or additives.

Optional component (VII) may be (A) a nonyl phenyl ethoxylate formulation, (B) ethyl alcohol or (C) an anionic surfactant. It has been found that Triton ™ X-405 from Union Carbide is suitable for (A). Acceptable anionic surfactants (C) include alkyl sulfates, linear alkylbenzene sulfonates, alkyl ether sulfates, salts of fatty acids and secondary alkane sulfonates. These alternatives for (VII) are not necessarily mutually exclusive.

Suitable compositional ranges for the alternatives for optional component (VII) have been determined. For (A), an acceptable range is up to 50 parts with 0.5-20 parts being preferred and 1-10 parts being most preferred. For (B), up to 10 parts is suitable, while 0.1-7 parts is preferred and 1-5 parts is most preferred. A suitable range for (C) would be 5-80 parts.

Carrier is defined for the purposes of this disclosure as the sum of all components in the foam control composition, except (I) and (II). It is desirable that carrier make up 25 to 85 weight percent of the compositions of this invention with a 30-80 weight percent range being preferred. Weight percents here are based on all the components present.

The foam control compositions according to the present invention may be made by combining components (I) and (II) as defined above to form a premix. This premix is then added to a blend of the other components with mixing. The resulting compositions are expected to exhibit very desirable low rates of phase separation (creaming) due to good density matching between the continuous phase (the sum of components (III), (IV) and (V)) and the sum of components (I) and (II); thus, these compositions may be successfully added to detergents or other media to be treated many weeks after preparation.

Addition of effective amounts of these foam control compositions to detergents yields products with desirable foaming levels and high stability characteristics. It has been found that these foam control compositions may be added directly to liquid detergents, and it is expected that they may also be mixed with solid detergents with the same general properties resulting.

While in no way meant to limit the scope of the invention, it is theorized that the surprisingly good combination of characteristics possessed or brought by the compositions defined herein is mainly due to synergy between components (III), (IV) and (V) which effectively make up the continuous phase of the foam control compositions according to the invention. This synergy is thought to be enhanced by component (VI) which acts as an emulsifier for components (I) and (II) and also as a stabilizer; component (VII), when present, is theorized to enhance this stabilization and/or the synergy between the components of the continuous phase. It is further similarly theorized that the compatibility of the carrier to detergent and other formulations is another factor in explaining the properties noted.

Although a main application of the foam control compositions disclosed herein is use in detergents, this should not be taken as limiting the scope of the invention. These compositions are suited to many other applications as should be apparent to those of ordinary skill in the art upon consideration of the disclosure herein.

### Examples and Comparative Examples

For all examples and comparative examples, amounts used for each component are specified in tables following the description of their preparation.

The CLSF used was a reaction product prepared according to the method of Aizawa et al. in U.S. Patent No. 4,639,489 from 59.2 parts of a trimethylsilyl-terminated polydimethylsiloxane having a viscosity of 1000 mm²/s at 25 deg C; 28.2 parts of a hydroxyl-terminated polydimethylsiloxane having a viscosity of 12,500 mm²/s at 25 deg C; 2.8 parts of ethyl polysilicate ("Silicate 45" by Tama Kaguku Kogyo Co., Ltd., Japan); 1.3 parts of a potassium silanolate catalyst; 2.8 parts of Aerosil ™ 200 Silica (Degussa-Huls Corporation) having a surface area of 200 m²/g; and 4.8 parts of hydroxyl-terminated polydimethylsiloxane having a viscosity of 40 mm²/s at 25 deg C. In addition to the above ingredients, this formulation also contains 0.625 part water, 0.005 part Silwet L-77 Silicone Glycol (C.K. Witco Corporation) and 0.09 part of L-540 Silicone Glycol (Union Carbide Corporation).

The BSF used was a reaction product prepared according to the method of John et al. in EP 0 217 501 by mixing 64.7 parts of a polydimethylsiloxane having its terminal ends blocked with trimethylsilyl groups, 2.72 parts of a silicone resin (which is a hydroxy-functional siloxane resin copolymer comprising (CH₃)₃SiO_{1/2} and Si0₂ units in a ratio of 0.75:1), 32.3 parts polydimethylsiloxane having its terminal ends blocked with hydroxyl groups, and 0.15 parts of a catalyst consisting of 10 weight percent potassium hydroxide in isopropyl alcohol. The mixture was reacted at 80 deg C with mixing for 5 hours and neutralized with 0.015 parts glacial acetic acid and 0.16 parts water.

LSF as used herein was a blend made by mixing with heating 91 parts trimethylsilyl end blocked polydimethylsiloxane having a viscosity of 500. mPa · s (500 cP) at 25 deg C, 3 parts hydroxyl end blocked polydimethylsiloxane, 6 parts hydrophobic silica, and 0.025 parts ammonium carbonate.

Sipernat ™ D17, D13 and D10 ("Sipernat D17", "Sipernat D13"and "Sipernat D10") as used herein were all by Degussa-Huls. The Glucopon ™ 625 FE ("Glucopon 625 FE") was by Henkel Corporation, the Neodol ™ 23-6.5 ("Neodol 23-6.5") was by Shell Chemical Company, and the water was deionized.

The BSPE used was a cross-linked organopolysiloxane polymer having at least one polyoxyalkylene group prepared according to the method described in Tonge et al. in EP 0 663 225 as follows. 12.8 parts of (A1) and 2.6 parts of (B1) were placed into a reactor, mixed, and heated to 80 deg C. Then, 0.001 part of (E) was added, and the mixture was allowed to react for 60 minutes. 60.2 parts of (C1) and 24.4 parts of (D) were then added. The mixture was then heated to 90 deg C. An additional 0.001 part of (E) was added. The mixture was allowed to further react at 90 deg C for 2 hours, followed by vacuum stripping to remove isopropanol. The final mixture was cooled and filtered.
Component (A1) was a linear polysiloxane having the formula: 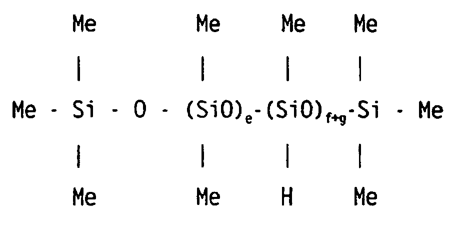 wherein, Me is a methyl group, e has a value of 108 and f+g has a value of 10.
Component (B1) was a polysiloxane having the formula: 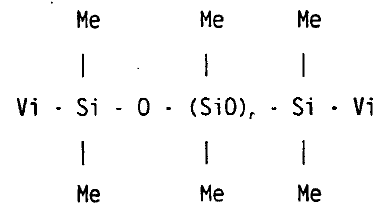 wherein, Me is a methyl group, Vi is a vinyl group and r is such that B1 has a molecular weight of 11,000.
Component (C1) was a polyoxyalkylene having the formula:

   Vi-CH₂-O-(EO)ᵤ-(PO)ᵥ-H

   wherein, Vi is a vinyl group, EO is an ethylene oxide residue, PO is a propylene oxide residue, and u and v are such that C1 has a molecular weight of 3,100 with the ratio of u:v being 1:1.
Component (D) was isopropanol (as a solvent).
Component (E) was a 2 weight percent isopropanol solution of H₂PtCl₆·6H₂O.

The LSPE used was a block copolymer of polydimethylsiloxane and polyalkylene oxide having the structure: 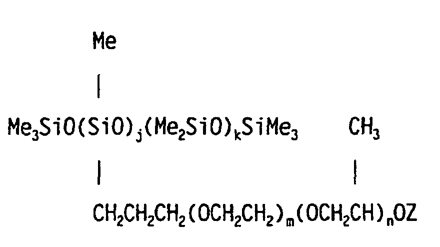 wherein, Me is a methyl group and j=4, k=396, m=18, n=18, and Z is hydrogen. The block copolymer was actually used as a 47 weight percent dilution in a mixture of hexamethylcyclotrisiloxane, octamethylcyclotetrasiloxane and decamethylcyclopentasiloxane. This is Surfactant 4 of Bausch et al. in EP 0 638 346. Note that parts indicated in the examples and comparative examples for LSPE include the solvent.

LSPE2 as used herein was a block copolymer of polydimethylsiloxane and polyalkylene oxide having the structure: 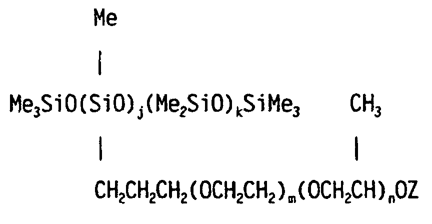 wherein, Me denotes a methyl group and j=2, k=22, m=12, n=0, and Z was -C(O)CH_{3.} This is Surfactant 3 of Bausch et al. in EP 0 638 346.

The Iconol TDA-10 was by BASF Corporation and the Triton ™ X-405 ("Triton X-405") was by Union Carbide. Shellflex ™ Mineral Oil ("Shellflex 6111") was by Shell Chemical Company and Duoprime 55 was by Lyondell Lubricants. Aerosil ™ R972 ("Aerosil R972") was by Degussa-Huls,

NISS was a nonionic silicone surfactant of trimethylsilyl end capped polysilicate prepared according to the method described by Keil in U.S. Patent No. 3,784,479. A mixture of 7 parts of a resin (which is a 70 weight percent xylene solution of a hydroxy-functional siloxane resin copolymer comprising (CH₃)₃SiO_{1/2} and SiO₂ units in a ratio of 0.75:1), 15 parts of a copolymer of ethylene oxide and propylene oxide having a number average molecular weight of 4000 and 38 parts of xylene was reacted at reflux for 8 hours with 0.2 part of a stannous octoate catalyst. 0.1 parts of phosphoric acid was added and the product was blended with 40 parts of a polyethylene glycol-polypropylene glycol copolymer. The product was stripped at 5.3 kPa at 140 deg C to remove xylene and then filtered. This is Surfactant 1 of Bausch et al. in EP 0 638 346.

The Polyglycol 15-200 ("P15-200") was by Dow Chemical Company. Keltrol ™ T xanthan gum ("Keltrol T") was by Kelco Biopolymers.

While being illustrative of compositions of the present invention, the examples and other specific embodiments disclosed in this specification should not be taken by themselves as defining any limitations on the scope of the invention or claims.

### Examples 1-9:

Each of these example compositions was prepared by mixing amounts as indicated in Table I below for components (I) and (II) to form a premix, then adding this premix to a blend of the indicated amounts of components (III), (IV), (V), (VI) and where stated (VII), with mechanical agitation.

**Table I:**

| Compositions of Examples 1-9 | | | | | | | | | |
|---|---|---|---|---|---|---|---|---|---|
| Components (overall parts by weight) | Ex 1 | Ex 2 | Ex 3 | Ex 4 | Ex 5 | Ex 6 | Ex 7 | Ex 8 | Ex 9 |
| (I) CLSF | | | | 37 | | | | | |
| (I) BSF | 37 | 37 | 37 | | | 37 | 37 | 37 | 37 |
| (I) LSF | | | | | 37 | | | | |
| (II) Sipernat D17 | 3 | 3 | 3 | | | 3 | 3 | 3 | 3 |
| (II) Sipernat D13 | | | | 3 | 3 | | | | |
| (III) Glucopon 625 FE | 35 | 35 | 35 | 35 | 35 | 35 | 25 | 35 | 30 |
| (IV) Neodol 23-6.5 | 7.5 | 7.5 | 7.5 | 7.5 | 7.5 | 7.5 | 15 | 7.5 | |
| (V) Water | 7.5 | 7.5 | 7.5 | 7.5 | 7.5 | 7.5 | 10 | 7.5 | 15 |
| (VI) BSPE | 5 | | | 5 | 5 | 5 | 5 | 10 | 5 |
| (VI) LSPE | | 5 | | | | | | | |
| (VI) LSPE2 | | | 5 | | | | | | |
| (VII) Ethoxylated tridecyl alcohol (Iconol TDA-10) | 5 | 5 | 5 | 5 | 5 | | | | 10 |
| (VII) Nonyl phenyl ethoxylate (Triton X-405) | | | | | | 5 | 5 | | |

### Comparative Examples 1-3:

Each of these comparative examples was prepared by mixing the amounts specified in Table II for (I) CLSF, (II) Sipernat D13 and component (VI).

**Table II:**

| Compositions of Comparative Examples 1-3 | | | |
|---|---|---|---|
| Components (overall parts by weight) | Comp Ex 1 | Comp Ex 2 | Comp Ex 3 |
| (I) CLSF | 46 | 46 | 46 |
| (I) BSF | 0 | 0 | 0 |
| (I) LSF | 0 | 0 | 0 |
| (II) Sipernat D17 | 0 | 0 | 0 |
| (II) Sipernat D13 | 4 | 4 | 4 |
| (III) Glucopon 625 FE | 0 | 0 | 0 |
| (IV) Neodol 23-6.5 | 0 | 0 | 0 |
| (V) Water | 0 | 0 | 0 |
| (VI) BSPE | 0 | 50 | 0 |
| (VI) LSPE | 0 | 0 | 50 |
| (VI) LSPE2 | 50 | 0 | 0 |

### Comparative Examples 4-5:

Each of these comparative examples was prepared by mixing the amounts specified in Table III below for CLSF with that for component (VI) under mechanical agitation.

### Comparative Examples 6-7:

These samples were prepared by mixing the amounts specified in Table III below for CLSF with that for Sipernat D10 to form a premix, then blending this premix with BSPE in the amount as indicated under mechanical agitation.

### Comparative Example 8:

This sample was prepared by mixing the amount indicated for CLSF with the amount indicated for BSPE in Table III below under mechanical agitation.

**Table III:**

| Compositions of Comparative Examples 4-8 | | | | | |
|---|---|---|---|---|---|
| Components (overall parts by weight) | Comp Ex 4 | Comp Ex 5 | Comp Ex 6 | Comp Ex 7 | Comp Ex 8 |
| (I) CLSF | 50 | 50 | 46 | 26 | 30 |
| (I) BSF | 0 | 0 | 0 | 0 | 0 |
| (I) LSF | 0 | 0 | 0 | 0 | 0 |
| (II) Sipernat D10 | 0 | 0 | 4 | 4 | 0 |
| (II) Sipernat D13 | 0 | 0 | 0 | 0 | 0 |
| (III) Glucopon 625 FE | 0 | 0 | 0 | 0 | 0 |
| (IV) Neodol 23-6.5 | 0 | 0 | 0 | 0 | 0 |
| (V) Water | 0 | 0 | 0 | 0 | 0 |
| (VI) BSPE | 50 | 0 | 50 | 70 | 70 |
| (VI) LSPE | 0 | 50 | 0 | 0 | 0 |
| (VI) LSPE2 | 0 | 0 | 0 | 0 | 0 |

### Comparative Examples 9-10:

Each of these comparative examples was prepared by adding the amount as indicated for CLSF to that for the specified organic oil in Table IV below with mechanical mixing.

### Comparative Example 11:

This sample was prepared by premixing CLSF and Sipernat D10 in amounts as indicated in Table IV below with mechanical mixing, then adding this mixture to Shellflex 6111 in the amounts indicated.

**Table IV:**

| Compositions of Comparative Examples 9-11 | | | |
|---|---|---|---|
| Components (overall parts by weight) | Comp Ex 9 | Comp Ex 10 | Comp Ex 11 |
| (I) CLSF | 50 | 50 | 46 |
| (I) BSF | 0 | 0 | 0 |
| (I) LSF | 0 | 0 | 0 |
| (II) Sipernat D10 | 0 | 0 | 4 |
| (II) Sipernat D13 | 0 | 0 | 0 |
| (III) Glucopon 625 FE | 0 | 0 | 0 |
| (IV) Neodol 23-6.5 | 0 | 0 | 0 |
| (V) Water | 0 | 0 | 0 |
| (VI) BSPE | 0 | 0 | 0 |
| (VI) LSPE | 0 | 0 | 0 |
| (VI) LSPE2 | 0 | 0 | 0 |
| Low MW Organic Oil - Shellflex 6111 | 50 | 0 | 50 |
| Low MW Organic Oil - Duoprime 55 | 0 | 50 | 0 |

### Comparative Example 12:

This comparative example was prepared by adding 31 parts CLSF to a combination of 4 parts NISS in 42 parts of P15-200 under mechanical mixing. The resulting mixture was then added to a pre-mix consisting of 2 parts Aerosil R972 in 21 parts P15-200 with further mechanical mixing.

### Comparative Example 13:

This comparative example was prepared by making a premix of 36 parts CLSF with 4 parts Sipernat D13 under mechanical agitation. This premix was then added to a mixture of 2.5 parts Aerosil 972 in 57.5 parts of P15-200 under mechanical agitation.

Compositional information for comparative examples 12-13 is summarized in Table V below.

**Table V:**

| Composition of Comparative Examples 12-13 | | |
|---|---|---|
| Components (overall parts by weight) | Comp Ex 12 | Comp Ex 13 |
| (I) CLSF | 31 | 36 |
| (I) BSF | 0 | 0 |
| (I) LSF | 0 | 0 |
| (II) Aerosil R972 | 2 | 2.5 |
| (II) Sipernat D13 | 0 | 4 |
| (III) Glucopon 625 FE | 0 | 0 |
| (IV) Neodol 23-6.5 | 0 | 0 |
| (V) Water | 0 | 0 |
| (VI) BSPE | 0 | 0 |
| (VI) LSPE | 0 | 0 |
| (VI) NISS | 4 | 0 |
| P15-200 (Polyglycol EO-PO co-polymer) | 63 | 57.5 |

### Comparative Example 14:

This sample was prepared by making a premix consisting of 37 parts LSF with 3 parts of Sipernat D13. The result was added to a mixture of 35 parts Glucopon 625 FE, 7.5 parts Neodol 23-6.5, 12.5 parts water, and 5 parts Iconol TDA-10 under mechanical agitation.

### Comparative Example 15:

This sample was prepared by making a premix consisting of 37 parts LSF with 3 parts of Sipernat D13. The result was added to a mixture of 5 parts BSPE, 50 parts water, and 5 parts Iconol TDA-10 under mechanical agitation.

### Comparative Example 16:

This sample was prepared by making a premix consisting of 18 parts LSF with 2 parts of Sipernat D13. The result was added to a mixture of 69.5 parts water, 0.5 parts Keltrol T xanthan gum, and 10 parts Glucopon 625 FE under mechanical agitation.

Compositional information for comparative examples 14-16 is summarized in Table VI below.

**Table VI:**

| Compositions of Comparative Examples 14-16 | | | |
|---|---|---|---|
| Components (overall parts by weight) | Comp Ex 14 | Comp Ex 15 | Comp Ex 16 |
| (I) CLSF | 0 | 0 | 0 |
| (I) BSF | 0 | 0 | 0 |
| (I) LSF | 37 | 37 | 18 |
| (II) Aerosil R972 | 0 | 0 | 0 |
| (II) Sipernat D13 | 3 | 3 | 2 |
| (II) Sipernat D17 | 0 | 0 | 0 |
| (III) Glucopon 625 FE | 35 | 0 | 10 |
| (IV) Neodol 23-6.5 | 7.5 | 0 | 0 |
| (V) Water | 12.5 | 50 | 69.5 |
| (VI) BSPE | 0 | 5 | 0 |
| (VI) LSPE | 0 | 0 | 0 |
| (VI) NISS | 0 | 0 | 0 |
| (VII) Ethoxylated tridecyl alcohol (Iconol TDA-10) | 5 | 5 | 0 |
| Keltrol T (xanthan gum) | 0 | 0 | 0.5 |

### Test Protocols

Foam control composition samples prepared according to the above examples and comparative examples were added to portions of the following detergent prototype, and the resulting compositions were evaluated as to wash foam production and stability.

### Detergent prototype formulation (percentages given are by weight: they do not add up to 100.0 due to rounding)

29.8% Distilled Water
33.7% Witcolate LES-60C by Witco Corporation (contains an alkyl ether sulfate)
15.7% Glucopon ™ 600 UP by Henkel Corporation (contains an alkyl polyglycoside)
8.3% Sodium Citrate
7.0% Propylene Glycol
2.6% Neodol 23-6.5 by Shell Chemical Company (a linear alcohol ethoxylate)
2.0% Ethanolamine
1.0% Emery 621 Coconut Fatty Acid by Henkel Corporation Wash foam test

General Electric Model WWA7678MALWH washing machines were loaded in turn with twelve 106.7 cm x 58.4 cm towels (86% cotton, 14% polyester) for ballast and filled with 68.1 liters of water of 0 ppm hardness containing 112 g of the detergent prototype and 0.112 g of one of the foam control compositions (0.1 weight %) of the examples and comparative examples, except that twice as much of the foam control composition in the case of comparative example 16 was used to compensate for its inherently lower level of silicone.

Average foam height was determined at various times during a 12 minute wash cycle as summarized in Table VII below. Thus, "Ht3" refers to the foam height in the washer after 3 minutes into the washer cycle, and so on, going up to "Ht12" for the foam height at 12 minutes into the cycle. Foam heights are given as "99" if there was foam out of the machine. To obtain "Wash Results" ratings, foams heights after 12 minutes into the cycle were characterized as "Good" if less than 1.5 cm, "OK" if from 1.5-5 cm and "Fail" if over 5 cm.

### Stability test

Samples of foam control compositions were prepared according to the above examples and comparative examples and mixed with prototype detergent such that the foam control composition was 1% by weight of the final composition. The resulting blends were allowed to stand for one week and visually evaluated according to the following rating.
1 = clear with no or very little surface scum/oil or "collar" around the container wall.
2 = slight amount of collar or surface scum/oil; can be re-dispersed into detergent.
3 = fair amount of collar or surface scum/oil; more difficult to re-disperse.
4 = significant collar or surface scum/oil; hard to re-disperse
5 = agglomeration or coalescence of silicone visible and cannot be re-dispersed.

**Table VII:**

| Wash and Stability Test Results | | | | | | |
|---|---|---|---|---|---|---|
| Foam Control Sample | Ht3 Avg (cm) | Ht6 Avg (cm) | Ht9 Avg (cm) | Ht12 Avg (cm) | Wash Results | Stability Results |
| Ex 1 | 0.50 | 0.75 | 1.00 | 1.00 | Good | 1 |
| Ex 2 | 0.50 | 0.50 | 0.50 | 1.00 | Good | 2 |
| Ex 3 | 0.25 | 0.50 | 0.50 | 1.00 | Good | 2 |
| Ex 4 | 0.83 | 1.75 | 1.67 | 3.67 | OK | 2 |
| Ex 5 | 0.83 | 1.75 | 2.00 | 2.75 | OK | 1 |
| Ex 6 | 0.08 | 0.50 | 0.50 | 0.83 | Good | 2 |
| Ex 7 | 0.50 | 0.50 | 1.00 | 2.00 | OK | 3 |
| Ex 8 | 0.50 | 0.50 | 1.83 | 1.92 | OK | 2 |
| Ex 9 | 0.50 | 0.83 | 0.83 | 1.67 | Good | 3 |
| Comp Ex 1 | 0.50 | 1.83 | 2.00 | 4.42 | OK | 5 |
| Comp Ex 2 | 6.42 | 99 | 99 | 99 | Fail | 3 |
| Comp Ex 3 | 0.50 | 1.00 | 1.83 | 3.08 | OK | 5 |
| Comp Ex 4 | 13.00 | 99 | 99 | 99 | Fail | 1 |
| Comp Ex 5 | 2.50 | 3.08 | 3.00 | 3.00 | OK | 5 |
| Comp Ex 6 | 9.67 | 99 | 99 | 99 | Fail | 4 |
| Comp Ex 7 | 99 | 99 | 99 | 99 | Fail | 4 |
| Comp Ex 8 | 99 | 99 | 99 | 99 | Fail | 4 |
| Comp Ex 9 | 99 | 99 | 99 | 99 | Fail | 2 |
| Comp Ex 10 | 99 | 99 | 99 | 99 | Fail | 2 |
| Comp Ex 11 | 1.58 | 4.67 | 9.42 | 99 | Fail | 3 |
| Comp Ex 12 | 1.25 | 4.58 | 4.75 | 8.50 | Fail | 4 |
| Comp Ex 13 | 0.50 | 0.50 | 0.50 | 0.50 | Good | 3 |
| Comp Ex 14 | 0.17 | 0.59 | 0.92 | 1.50 | Good | 1 |
| Comp Ex 15* | ----- | ---- | ---- | ----- | ----- | ----- |
| Comp Ex 16* | 0.00 | 0.13 | 0.46 | 0.88 | Good | ----- |

| | | | | | | |
|---|---|---|---|---|---|---|
| *Comparative example 15 would not produce an emulsion. Comparative example 16 would not produce a uniform dispersion. | | | | | | |

In interpreting the above results, it might be helpful to consider that none of the foam control compositions of the comparative examples contains a component (III), (IV) and (V) based continuous phase (among other possible differences) as do the compositions of the present invention exemplified by examples 1-9. The comparative examples are (except for 14-15) representative of compositions disclosed in the prior art.

Wash foam tests were repeated using some of the foam control compositions tested at half the previous dosage. Compositions that can be used at a lower level are advantageous because of lower cost. These results are summarized in Table VIII.

**Table VIII:**

| Wash Test Results at Half Previous Dose of Foam Control Composition | | | | | |
|---|---|---|---|---|---|
| Foam Control Sample | Ht3 Avg (cm) | Ht6 Avg (cm) | Ht9 Avg (cm) | Ht12 Avg (cm) | Wash Results |
| Ex 6 | 0.61 | 0.90 | 1.05 | 2.56 | OK |
| CompEx 13 | 99 | 99 | 99 | 99 | Fail |
| CompEx 14 | 0.54 | 1.42 | 2.83 | 8.61 | Fail |
| CompEx 16 | 0.05 | 0.89 | 1.75 | 4.00 | OK |

**Table IX:**

| Specific Gravities of Various Continuous Phase Typc Blends (%'s are by weight) | | | | |
|---|---|---|---|---|
| Blend | % Component III (as Glucopon 625 FE) | % Component IV (as Neodol 23-6.5) | % Component V (Water) | Specific Gravity @ 25 deg C |
| 1 | 100 | 0 | 0 | 1.065 |
| 2 | 66.67 | 16.67 | 16.67 | 1.045 |
| 3 | 50 | 15 | 35 | 1.035 |
| 4 | 50 | 0 | 50 | 1.031 |
| 5 | 33.33 | 33.33 | 33.33 | 1.026 |
| 6 | 16.67 | 16.67 | 66.67 | 1.014 |
| 7 | 50 | 35 | 15 | 1.010 |
| 8 | 0 | 0 | 100 | 1.000 |
| 9 | 0 | 50 | 50 | 0.999 |
| 10 | 0 | 100 | 0 | 0.968 |

Blend 2 is similar to the blend ratio used in Examples 1-6 and 8, while blend 7 is similar to the blend ratio used in Example 7. Considering Stoke's Law, good gravity matching between the sum of components (I) and (II) (usually greater than 1.0 specific gravity at 25 deg C) and the continuous phase would be expected to result in significant slowing of phase separation (creaming) in such compositions. This is consistent with the theory of the invention and experimental results previously given.

## Claims

1. A foam control composition comprising:
(I) a silicone based antifoaming agent,
(II) a silica,
(III) an alkylpolyglycoside formulation,
(IV) a linear alcohol ethoxylate,
(V) water, and
(VI) a silicone polyether.

2. The foam control composition of claim 1, wherein there are 10-80 parts by weight (I), 1-20 parts by weight (II), 1-90 parts by weight (III), 1-70 parts by weight (IV). 1-70 parts by weight (V), and 0.5-50 parts by weight (VI).

3. The foam control composition of any of claims 1 and 2, wherein component (IV) is a mixture of ethoxylated tridecyl alcohol and a linear alcohol ethoxylate different from ethoxylated tridecyl alcohol.

4. The foam control composition of any of claims 1 and 2, with the proviso that there is no ethoxylated tridecyl alcohol present.

5. The foam control composition of any of the preceding claims further comprising (VII): a nonyl phenyl ethoxylate formulation, ethyl alcohol or an anionic surfactant.

6. The foam control composition of claim 5 comprising (VII):
up to 50 parts by weight of a nonyl phenyl ethoxylate formulation.
up to 10 parts by weight ethyl alcohol or 5-80 parts by weight of an anionic surfactant.

7. The foam control composition of any of claims 5 and 6, comprising (VII): an alkyl sulfate, a linear alkylbenzene sulfonate, an alkyl ether sulfate, a salt of a fatty acid, or a secondary alkane sulfonate.

8. A method for making a foam control composition comprising:
(a) blending a silicone based antifoaming agent (I) with a silica (II) to form a premix and
(b) adding the premix to a blend comprising: an alkylpolyglycoside formulation (III), a linear alcohol ethoxylate (IV), water (V) and a silicone polyether (VI).

9. A method for making a detergent based formulation comprising:
adding an effective amount of the foam control composition according to any of claims 1-7 to a detergent.

## Patentansprüche

1. Schaumregulierungszusammensetzung, enthaltend:
(I) ein Antischaummittel auf Siliconbasis,
(II) eine Kieselsäure,
(III) eine Alkylpolyglykosid-Formulierung,
(IV) ein lineares Alkoholethoxylat,
(V) Wasser und
(VI) einen Siliconpolyether.

2. Schaumregulierungszusammensetzung nach Anspruch 1, wobei 10-80 Gewichtsteile (I), 1-20 Gewichtsteile (II), 1-90 Gewichtsteile (III), 1-70 Gewichtsteile (IV), 1-70 Gewichtsteile (V) und 0,5-50 Gewichtsteile (VI) vorhanden sind.

3. Schaumregulierungszusammensetzung nach einem der Ansprüche 1 und 2, wobei Komponente (IV) eine Mischung von ethoxyliertem Tridecylalkohol und einem linearen Alkoholethoxylat ist, welches sich von ethoxyliertem Tridecylalkohol unterscheidet.

4. Schaumregulierungszusammensetzung nach einem der Ansprüche 1 und 2, unter der Voraussetzung, dass kein ethoxylierter Tridecylalkohol vorhanden ist.

5. Schaumregulierungszusammensetzung nach einem der vorstehenden Ansprüche, die zusätzlich (VII) enthält: eine Nonylphenylethoxylat-Formulierung, Ethylalkohol oder ein anionisches oberflächenaktives Mittel.

6. Schaumregulierungszusammensetzung nach Anspruch 5, enthaltend (VII): bis zu 50 Gewichtsteile einer Nonylphenylethoxylatformulierung, bis zu 10 Gewichtsteile Ethylalkohol oder 5-80 Gewichtsteile eines anionischen oberflächenaktiven Mittels.

7. Schaumregulierungszusammensetzung nach einem der Ansprüche 5 und 6, enthaltend (VII): ein Alkylsulfat, ein lineares Alkylbenzolsulfonat, ein Alkylethersulfat, ein Salz einer Fettsäure oder ein sekundäres Alkansulfonat.

8. Verfahren zur Herstellung einer Schaumregulierungszusammensetzung, enthaltend:
(a) Mischen eines Antischaummittels (I) auf Siliconbasis mit einer Kieselsäure (II), um eine Vormischung zu bilden, und
(b) Zugeben dieser Vormischung zu einer Mischung, enthaltend eine Alkylpolyglykosid-Formulierung (III), ein lineares Alkoholethoxylat (IV), Wasser (V) und einen Siliconpolyether (VI).

9. Verfahren zur Herstellung einer auf Reinigungsmittel basierenden Formulierung, umfassend Zugeben einer wirksamen Menge der Schaumregulierungszusammensetzung nach einem der Ansprüche 1-7 zu einem Reinigungsmittel.

## Revendications

1. Composition antimousse comprenant:
(I) un agent antimousse à base de silicone,
(II) une silice,
(III) une formulation d'alkylpolyglycoside,
(IV) un éthylate d'alcool linéaire,
(V) de l'eau, et
(VI) un polyéther de silicone.

2. Composition antimousse selon la revendication 1, dans laquelle il y a 10 à 80 parties en masse de (I), 1 à 20 parties en masse de (II), 1 à 90 parties en masse de (III), 1 à 70 parties en masse de (IV), 1 à 70 parties en masse de (V) et 0,5 à 50 parties en masse de (VI).

3. Composition antimousse selon l'une quelconque des revendications 1 et 2, dans laquelle le constituant (IV) est un mélange de tridécanol éthoxylé et d'un éthylate d'alcool linéaire différent du tridécanol éthoxylé.

4. Composition antimousse selon l'une quelconque des revendications 1 et 2, à condition qu'elle ne contienne pas de tridécanol éthoxylé.

5. Composition antimousse selon l'une quelconque des revendications précédentes, comprenant en outre (VII) une formulation d'éthylate de nonylphényle, de l'éthanol ou un agent tensioactif

6. Composition antimousse selon la revendication 5, comprenant (VII) jusqu'à 50 parties en masse d'une formulation d'éthylate de nonylphényle, jusqu'à 10 parties en masse d'éthanol ou 5 à 80 parties en masse d'un agent tensioactif.

7. Composition antimousse selon l'une quelconque des revendications 5 et 6, comprenant (VII) un alkylsulfate, un alkylbenzènesulfonate linéaire, un alkyléthersulfate, un sel d'un acide gras, ou un alcanesulfonate secondaire.

8. Procédé de préparation d'une composition antimousse, comprenant
(a) le mélange d'un agent antimousse à base de silicone (I) avec une silice (II) pour la formation d'un mélange préalable et
(b) l'addition du mélange préalable à un mélange comprenant une formulation d'alkylpolyglycoside (III), un éthylate d'alcool linéaire (IV), de l'eau (V) et un polyéther de silicone (VI).

9. Procédé de préparation d'une formulation à base de détergent comprenant l'addition d'une quantité efficace de la composition antimousse selon l'une quelconque des revendications 1 à 7 à un détergent.
